# EUROPEAN PATENT SPECIFICATION

(11) **EP 4 070 673 B1**
(45) Date of publication and mention of the grant of the patent: **24.12.2025**
(21) Application number: 20895239.0
(22) Date of filing: 21.10.2020
(51) Int. Cl.: H05B 3/16, H05B 3/26, A24F 40/40, A24F 40/46, A24F 40/70, B32B 18/00, C04B 38/00

(54) **ELECTRONIC ATOMIZATION DEVICE, ATOMIZATION CORE AND PREPARATION METHOD THEREFOR**
ELEKTRONISCHE ZERSTÄUBUNGSVORRICHTUNG, ZERSTÄUBUNGSKERN UND HERSTELLUNGSVERFAHREN DAFÜR
DISPOSITIF D'ATOMISATION ÉLECTRONIQUE, NOYAU D'ATOMISATION ET PROCÉDÉ DE PRÉPARATION ASSOCIÉ

(30) Priority: 02.12.2019 CN 201911214936
(43) Date of publication of application: 12.10.2022
(73) Proprietor: Shenzhen Smoore Technology Limited, Shenzhen, Guangdong 518102 (CN)
(72) Inventor: ZHOU, Hongming, Shenzhen, Guangdong 518102 (CN); JIANG, Dongfu, Shenzhen, Guangdong 518102 (CN); CHENG, Zhenqian, Shenzhen, Guangdong 518102 (CN); CHEN, Feng, Shenzhen, Guangdong 518102 (CN)
(74) Representative: Herrero & Asociados, S.L.
(86) International application number: PCT/CN2020/122524
(87) International publication number: WO 2021/109740

(56) References cited:
- WO-A1-2017/128038
- WO-A1-2018/201561
- CN-A- 109 527 657
- CN-A- 109 527 657
- CN-A- 109 674 094
- CN-A- 109 984 387
- CN-A- 110 419 779
- CN-A- 111 053 291
- CN-U- 209 498 589
- CN-U- 210 642 434
- CN-U- 211 746 958
- DE-A1- 102016 120 803

## Description

### TECHNICAL FIELD

The present disclosure relates to the field of electronic cigarette technologies, and specifically, to an electronic atomization device, an atomization core and a preparation method thereof.

### BACKGROUND

An electronic cigarette looks and tastes like a cigarette, but generally does not contain harmful ingredients like tar, aerosols etc. in a conventional cigarette, thus the physical harm to a user is greatly reduced. Therefore, the electronic cigarette is generally used as an alternative of the conventional cigarette for smoking cessation. The safety of the electronic cigarette is the primary factor of interest.

Currently, during an inhaling process of the electronic cigarette, an atomization core thereof inevitably suffers a risk of powder-falling due to repeated thermal cycling and E-liquid erosion. In addition, in a hot environment, heavy metal substance inside the atomization core and heavy metal substance inside a heating film may be entrained into the airflow during the inhaling process, causing a potential health hazard to the user.

Document CN109527657A discloses an atomization core comprising a stacking arrangement with a porous ceramic layer, a dense ceramic layer and a heating element.

### SUMMARY

The present disclosure provides an electronic atomization device, and an atomization core and a preparation method thereof, to resolve the technical problems of powder-falling and heavy metal precipitation of the atomization core in the related art.

To resolve the foregoing technical problems, one technical solution of the present disclosure is to provide an atomization core of an electronic atomization device. The atomization core includes: a porous ceramic substrate, a ceramic covering layer, and a heating film. The ceramic covering layer is combined on a surface of the porous ceramic substrate, the heating film is combined on a surface of the ceramic covering layer away from the porous ceramic substrate, a porosity of the ceramic covering layer is less than a porosity of the porous ceramic substrate, and a plurality of through holes are defined in the ceramic covering layer.

In some embodiments, the porosity of the porous ceramic substrate is in a range of 40% to 80%; an average pore size of micropores on the porous ceramic substrate is in a range of 10 µm to 40 µm; a material for making the porous ceramic substrate is zirconium oxide, silicon oxide, aluminum oxide, or mullite; and/or a thickness of the porous ceramic substrate is in a range of 1 mm to 4 mm.

In some embodiments, the porosity of the ceramic covering layer is in a range of 10% to 20%; a material for making the ceramic covering layer is zirconium oxide, silicon oxide, aluminum oxide, silicon carbide, or mullite; a thickness of the ceramic covering layer is in a range of 0.05 mm to 0.2 mm; and/or a powder size of the material for making the ceramic covering layer is in a range of 0.1 µm to 5 µm.

In some embodiments, a diameter of each hole is in a range of 5 µm to 50 µm.

In some embodiments, a ratio of a total opening area of the plurality of holes to a cross-sectional area of the ceramic covering layer perpendicular to an extending direction of the holes is in a range of 5% to 15%.

In some embodiments, a powder size of the material for making the ceramic covering layer is in a range of 0.1 µm to 5 µm.

In some embodiments, the heating film is made of metal or alloy; and/or a thickness of the heating film is in a range of 2 µm to 10 µm.

In some embodiments, the heating film includes a first covering film and a second covering film. The first covering film is stacked on the surface of the ceramic covering layer away from the porous ceramic substrate, and the second covering film is stacked on a surface of the first covering film away from the ceramic covering layer.

In some embodiments, the first covering film and the second covering film are made of metal or alloy.

To resolve the foregoing technical problems, another technical solution of the present disclosure is to provide a preparation method of an atomization core of an electronic atomization device. The method includes: preparing a porous ceramic substrate; preparing a ceramic covering layer, and defining a plurality of holes penetrating the ceramic covering layer in the ceramic covering layer, a porosity of the ceramic covering layer is less than that of the porous ceramic substrate; stacking and combining the porous ceramic substrate and the ceramic covering layer to form an integral structure; forming a heating film on a surface of the ceramic covering layer away from the porous ceramic substrate.

In some embodiments, the preparing a porous ceramic substrate includes: making a first tape-casting slurry from a raw material for making the porous ceramic substrate; and making the porous ceramic substrate through a tape-casting process, a thickness of the porous ceramic substrate is in a range of 1 mm to 4 mm.

In some embodiments, the preparing a ceramic covering layer includes: making a second tape-casting slurry from a raw material for making the ceramic covering layer, a powder size of the material for making the ceramic covering layer is in a range of 0.1 µm to 5 µm; and making the ceramic covering layer through a tape-casting process or a dry pressing process, a thickness of the ceramic covering layer is in a range of 0.05 mm to 0.2 mm.

In some embodiments, the stacking and combining the porous ceramic substrate and the ceramic covering layer to form an integral structure includes: connecting the porous ceramic substrate to the ceramic covering layer through bonding or sintering.

In some embodiments, the forming a heating film on a surface of the ceramic covering layer away from the porous ceramic substrate includes: forming the heating film on the surface of the ceramic covering layer away from the porous ceramic substrate through physical vapor deposition (PVD), chemical vapor deposition (CVD), electroplating, electro-deposition, ion plating, or coating, a thickness of the heating film is in a range of 2 µm to 10 µm.

In some embodiments, the forming a heating film on a surface of the ceramic covering layer away from the porous ceramic substrate includes: forming a first covering film on the surface of the ceramic covering layer away from the porous ceramic substrate through PVD, CVD, electroplating, electro-deposition, ion plating, or coating; and forming a second covering film on a surface of the first covering film away from the ceramic covering layer through PVD, CVD, electroplating, electro-deposition, ion plating, or coating, the first covering film and the second covering film form the heating film.

In some embodiments, the first covering film and the second covering film are made of metal or alloy.

To resolve the foregoing technical problems, another technical solution of the present disclosure is to provide an electronic atomization device. The electronic atomization device includes a liquid storage cavity configured to store E-liquid and the atomization core as described above. The E-liquid in the liquid storage cavity is capable of being transmitted to the ceramic covering layer through the porous ceramic substrate.

Beneficial effects of the present disclosure are as follows. Different from the related art, in the embodiments of the present disclosure, a ceramic covering layer whose porosity is less than that of a porous ceramic substrate is combined on a surface, which is closer to a heating component, of the porous ceramic substrate, so that powder-falling of the atomization core can be avoided, since the ceramic covering layer with a less porosity has a greater density and prevents power-falling. In addition, the ceramic covering layer with a less porosity can isolate precipitates of heavy metal inside the porous ceramic substrate, so that the heavy metal may be prevented from being entrained into airflow during inhaling, thereby improving safety performance of the electronic atomization device.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skills in the art may obtain other drawings from these accompanying drawings without creative efforts.
FIG. 1 is a schematic diagram of a cross-sectional structure of an atomization core according to an embodiment of the present disclosure.
FIG. 2 is a schematic diagram of a cross-sectional structure of the atomization core in FIG. 1 taken along a line I-I.
FIG. 3 is an enlarged partial view of a cross-sectional structure of an atomization core according to another embodiment of the present disclosure.
FIG. 4 is a schematic flowchart of a preparation method of an atomization core according to an embodiment of the present disclosure.
FIG. 5 is a schematic flowchart of processing corresponding to the preparing process in FIG. 4.
FIG. 6 is a schematic flowchart of step S104 in FIG. 4.
FIG. 7 is a schematic flowchart of a preparation method of an atomization core according to another embodiment of the present disclosure.
FIG. 8 is a schematic flowchart of processing corresponding to the preparing process in FIG. 7.

### DETAILED DESCRIPTION

The technical solutions in the embodiments of the present disclosure are clearly and thoroughly described below with reference to the accompanying drawings in the embodiments of the present disclosure. Apparently, the described embodiments are merely some but not all of the embodiments of the present disclosure. All other embodiments obtained by a person of ordinary skills in the art based on the embodiments of the present disclosure without creative efforts shall fall within the protection scope of the present disclosure.

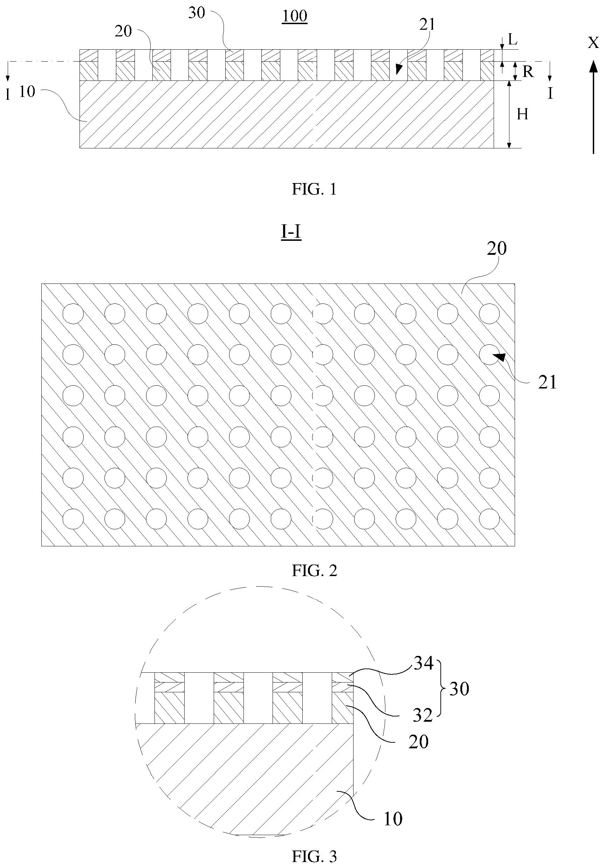

Referring to FIG. 1, FIG. 1 is a schematic diagram of a cross-sectional structure of an atomization core according to an embodiment of the present disclosure. The present disclosure provides an atomization core 100 of an electronic atomization device, and the atomization core 100 includes a porous ceramic substrate 10, a ceramic covering layer 20, and a heating film 30. The ceramic covering layer 20 is combined or bonded on a surface of the porous ceramic substrate 10, and the heating film 30 is combined or bonded on a surface of the ceramic covering layer 20 away from the porous ceramic substrate 10. A porosity of the ceramic covering layer 20 is less than that of the porous ceramic substrate 10, and a plurality of through holes 21 are defined in the ceramic covering layer 20.

The porosity refers to a ratio of a total volume of micropores in a porous medium to a total volume of the porous medium. The ceramic covering layer 20 being combined or bonded on a surface of the porous ceramic substrate 10 means that, the ceramic covering layer 20 is combined on a surface, which is closer to a heating component, of the porous ceramic substrate 10, to prevent a direct contact between the porous ceramic substrate 10 and the heating component. As shown in FIG. 1, in this embodiment, the ceramic covering layer 20 is combined on an upper surface of the porous ceramic substrate 10.

In some embodiments of the present disclosure, the ceramic covering layer 20 with a porosity less than that of the porous ceramic substrate 10, is combined on a surface of the porous ceramic substrate 10 closer to a heating component. In this case, since the ceramic covering layer 20 with a less porosity has a greater density and no powder-falling phenomenon will occur, thus the powder-falling phenomenon of the atomization core 100 can be avoided. In addition, the ceramic covering layer 20 with a less porosity can isolate precipitates of heavy metal substance inside the porous ceramic substrate 10, so that the heavy metal substance can be prevented from being entrained into the airflow during the inhaling process, and safety performance of the electronic atomization device can be improved.

In some embodiments, a material for making the porous ceramic substrate 10 may be zirconium oxide, silicon oxide, aluminum oxide, mullite and the like, and a material for making the ceramic covering layer 20 may be zirconium oxide, silicon oxide, aluminum oxide, silicon carbide, mullite and the like. The material of the porous ceramic substrate 10 and the material of the ceramic covering layer 20 may be of the same type or different types. The types of the material of the porous ceramic substrate 10 and the material of the ceramic covering layer 20 are not limited in the embodiments of the present disclosure.

In some embodiments, the porosity of the porous ceramic substrate 10 is in the range of 40% to 80%. A value of the porosity may be adjusted according to composition of E-liquid. For example, when the E-liquid has a relatively great viscosity, a relatively great porosity is selected to ensure a drainage or liquid guiding effect.

In some embodiment, the porosity of the porous ceramic substrate 10 is in the range of 50% to 60%. By controlling the porosity of the porous ceramic substrate 10 to be within the range of 50% to 60%, good liquid guiding efficiency of the porous ceramic substrate 10 is ensured, and dry burning phenomenon caused by poor circulation of the E-liquid can be prevented, thereby improving an atomizing effect. The porous ceramic substrate 10 can be further prevented from guiding liquid at an excessively great velocity. The excessively great liquid guiding velocity can make the liquid difficult to be locked, and a probability of liquid leakage is increased.

In some embodiments, an average pore size of micro-pores in the porous ceramic substrate 10 is in the range of 10 µm to 40 µm. For example, the average pore size may be 10 µm, 15 µm, 20 µm, 25 µm, 30 µm, 35 µm, 40 µm or the like, which is not specifically limited in the embodiments of the present disclosure.

According to the foregoing embodiments, by setting pore sizes of the micro-pores with suitable sizes and uniform distribution, liquid guiding of the porous ceramic substrate 10 may be uniform, thereby achieving a better atomizing effect.

In some embodiments, a thickness of the porous ceramic substrate 10 is in the range of 1 mm to 4 mm. The thickness of the porous ceramic substrate 10 refers to a length of the porous ceramic substrate 10 in a stacking direction of the porous ceramic substrate 10 and the ceramic covering layer 20. In this embodiment, the stacking direction of the porous ceramic substrate 10 and the ceramic covering layer 20 is a direction X shown in FIG. 1. The thickness H of the porous ceramic substrate 10 in the direction X is in the range of 1 mm to 4 mm. By providing the porous ceramic substrate 10 with a suitable thickness, a liquid guiding path can be shortened, and liquid transmission may be fluent. Dry burning can also be prevented.

In some embodiments, the thickness H of the porous ceramic substrate 10 in the direction X may be 1 mm, 1.5 mm, 2 mm, 2.5 mm, 3 mm, 3.5 mm, 4 mm and the like, which is not specifically limited in the embodiments of the present disclosure.

The porosity of the ceramic covering layer 20 is in the range of 10% to 20%. In the same atomization core 100, the porosity of the ceramic covering layer 20 is less than that of the porous ceramic substrate 10, so that a dense ceramic covering layer 20 is formed on the surface of the porous ceramic substrate 10. In an embodiment, the porosity of the ceramic covering layer 20 may be in the ranges of 10% to 18%, 10% to 16%, 10% to 14%, 10% to 12%, 12% to 18%, 12% to 16%, 12% to 14%, 14% to 16%, 14% to 18%, 16% to 18% and the like. In another embodiment, the porosity of the porous ceramic substrate 10 is in the range of 50% to 60%, and the porosity of the ceramic covering layer 20 is in the range of 14% to 16%.

In some embodiments, a thickness of the ceramic covering layer 20 is in the range of 0.05 mm to 0.2 mm. The thickness of the ceramic covering layer 20 refers to a length of the ceramic covering layer 20 in the stacking direction of the porous ceramic substrate 10 and the ceramic covering layer 20. In this embodiment, the stacking direction of the porous ceramic substrate 10 and the ceramic covering layer 20 is the direction X shown in FIG. 1, and a thickness R of the ceramic covering layer 20 in the direction X is in the range of 0.05 mm to 0.2 mm. For example, the thickness R of the ceramic covering layer 20 in the direction X is 0.05 mm, 0.07 mm, 0.09 mm, 0.11 mm, 0.13 mm, 0.15 mm, 0.17 mm, 0.2 mm and the like, which is not specifically limited in the embodiments of the present disclosure.

In some embodiments, a powder size or power granularity of the material for making the ceramic covering layer 20 is in the range of 0.1 µm to 5 µm. The powder size is also referred to as a particle size, which refers to a scale of a space occupied by a particle. For a spherical particle, the powder size is a single parameter, namely, a diameter D. For a particle of an irregular shape, the powder size may be expressed by (any) projection height H, a maximum length M, a horizontal width W, a diameter of a sphere with a same volume, a diameter D of a sphere with a same surface area and the like.

In some embodiments, the powder size of the material for making the ceramic covering layer 20 is 0.1 µm, 0.5 µm, 1 µm, 1.5 µm, 2 µm, 2.5 µm, 3 µm, 3.5 µm, 4 µm and the like, which is not specifically limited in the embodiments of the present disclosure.

According to the foregoing optional embodiments, by providing the ceramic covering layer 20 with a suitable thickness, setting pore sizes of micro-pores with suitable sizes and uniform distribution, and providing a raw material with a relatively small powder size, the ceramic covering layer 20 can effectively isolate precipitates of heavy metal substance.

Further, as shown in FIG. 1 and FIG. 2, FIG. 2 is a schematic diagram of a cross-sectional structure of the atomization core in FIG. 1 taken along a line I-I. A diameter of each hole 21 defined in the ceramic covering layer 20 is in the range of 5 µm to 50 µm. For example, the diameter of the hole 21 may be 5 µm, 10 µm, 15 µm, 20 µm, 25 µm, 30 µm, 35 µm, 40 µm, 45 µm, 50 µm and the like, which is not specifically limited in the embodiments of the present disclosure. It should be noted that, the holes 21 in the ceramic covering layer 20 are not the micro-pores in the porous medium, and the existence of the holes 21 does not affect the porosity of the ceramic covering layer 20. In other words, the porosity of the ceramic covering layer 20 is irrelevant to the plurality of holes 21 defined in the ceramic covering layer 20.

In some embodiments, the plurality of holes 21 are defined in the ceramic covering layer 20, and each hole 21 penetrates the ceramic covering layer 20 in the stacking direction of the porous ceramic substrate 10 and the ceramic covering layer 20. By defining the plurality of through holes 21 in the ceramic covering layer 20, the liquid guiding of the ceramic covering layer 20 may be facilitated.

In some embodiments, diameters of the plurality of holes 21 defined in the same ceramic covering layer 20 may be the same or may be different, which is not specifically limited in the embodiments of the present disclosure.

In this embodiment, as shown in FIG. 2, the plurality of holes 21 are defined in the ceramic covering layer 20 in an array. In another embodiment, the plurality of holes 21 may be alternatively distributed in an annular, and an arrangement manner of the plurality of holes 21 is not specifically limited in the embodiments of the present disclosure.

In some embodiments, the hole 21 defined in the ceramic covering layer 20 is a circular hole. In other embodiments, the shape of the hole 21 is a rectangle, an ellipse, a triangle, a diamond, a regular or irregular polygon and the like, which is not specifically limited in the embodiments of the present disclosure.

Further, a ratio of a total opening area of the plurality of holes 21 to a cross-sectional area of the ceramic covering layer 20 perpendicular to an extending direction of the holes 21 is in the range of 5% to 15%. For example, the ratio of the total opening area of the plurality of holes 21 to the cross-sectional area of the ceramic covering layer 20 perpendicular to the extending direction of the holes 21 is in the range of 5% to 12%, 5% to 10%, 5% to 8%, 7% to 12%, 7% to 10%, 9% to 12%, 10% to 12%, 7% to 15%, 9% to 15%, 12% to 15%, 14% to 15% and the like, which is not specifically limited in the embodiments of the present disclosure.

Specifically, in this embodiment, as shown in FIG. 1, the extending direction of the hole 21 is an axial direction of the circular hole, and the axial direction of the circular hole is parallel to the direction X. Therefore, the cross section of the ceramic covering layer 20 perpendicular to the extending direction of the holes 21 is a cross section of the ceramic covering layer 20 perpendicular to the direction X, namely, the cross section shown in FIG. 2. The total opening area of the plurality of holes 21 refers to an area of blank regions shown in the figure, and the ratio of the total opening area of the plurality of holes 21 to the cross-sectional area of the ceramic covering layer 20 perpendicular to the extending direction of the holes 21 refers to a ratio of the area of the blank regions in FIG. 2 to an area of the entire cross section.

Further, as shown in FIG. 1, the heating film 30 is combined on the surface of the ceramic covering layer 20 away from the porous ceramic substrate 10. The heating film 30 is configured to be electrically connected to an electrode and generate heat to atomize the E-liquid.

In some embodiments, a thickness of the heating film 30 is in the range of 2 µm to 10 µm. The thickness of the heating film 30 refers to a length of the heating film 30 in the stacking direction of the porous ceramic substrate 10 and the ceramic covering layer 20. As shown in FIG. 1, the thickness of the heating film 30 is L. The thickness L may be specifically 2 µm, 3 µm, 4 µm, 5 µm, 6 µm, 7 µm, 8 µm, 9 µm, 9.5 µm, 10 µm and the like, which is not specifically limited in the embodiments of the present disclosure.

In some embodiments, as shown in FIG. 3, FIG. 3 is an enlarged partial view of a cross-sectional structure of an atomization core according to another embodiment of the present disclosure. The heating film 30 includes a first covering film 32 and a second covering film 34. The first covering film 32 is stacked on the surface of the ceramic covering layer 20 away from the porous ceramic substrate 10, and the second covering film 34 is stacked on a surface of the first covering film 32 away from the ceramic covering layer 20.

The first covering film 32 can be made of metal or alloy. To increase the bonding force between the first covering film 32 and the porous ceramic substrate 10, the first covering film 32 may be made of a material that can be stably bonded to the porous ceramic substrate 10. For example, the first covering film 32 can be made of titanium, zirconium, titanium-aluminum alloy, titanium-zirconium alloy, titanium-molybdenum alloy, titanium-niobium alloy, iron-aluminum alloy, tantalum-aluminum alloy and the like.

A titanium-zirconium alloy film made of the titanium-zirconium alloy is a local dense film, but the porous ceramic substrate 10 is in itself a porous structure. As a result, the titanium-zirconium alloy film formed on the surface of the porous ceramic substrate 10 also has a porous continuous structure. Pore size of the titanium-zirconium alloy film is slightly less than the pore size of the micro-pores on the surface of the porous ceramic substrate 10.

Further, the stability of titanium and zirconium of the titanium-zirconium alloy film in the air is relatively poor under a high temperature. Zirconium can easily adsorb hydrogen, nitrogen, and oxygen. Zirconium and titanium have enhanced gas adsorption after being alloyed. Therefore, when an electrode is prepared subsequently, due to the gas adsorption of the titanium-zirconium alloy, during a high temperature sintering (higher than 300 °C), intense oxidation reaction can occur, causing an abrupt change in the resistance of the first covering film 32. To prevent the first covering film 32 from contacting with air, one protection layer needs to be provided on a surface of the first covering film 32. The second covering film 34 can be used as the protection layer.

The second covering film 34 can also be made of metal or alloy. To prevent the first covering film 32 from contacting with air and being oxidized to cause an abrupt change in the resistance thereof, the second covering film 34 should be made of a material with stronger resistance to oxidation. For example, the second covering film 34 can be made of platinum, palladium, palladium-copper alloy, gold-silver-platinum alloy, gold-silver alloy, palladium-silver alloy, gold-platinum alloy and the like.

A protection layer made of silver or platinum is relatively loose and has a relatively low density, which can hardly isolate or insulate air completely. Gold can protect the titanium-zirconium alloy film well. However, to make a dense protection layer, a thickness of about 100 nm or larger is required, which can greatly reduce the electrical resistance of the entire heating component and brings a great cost. Therefore, in this embodiment, the gold-silver alloy is used, so that the density of the gold protection layer is retained while the costs are reduced. Electrical resistivity of the gold-silver alloy is increased by ten times after gold and silver are alloyed according to a specific ratio, the control of the electrical resistance of the entire heating component is thereby facilitated.

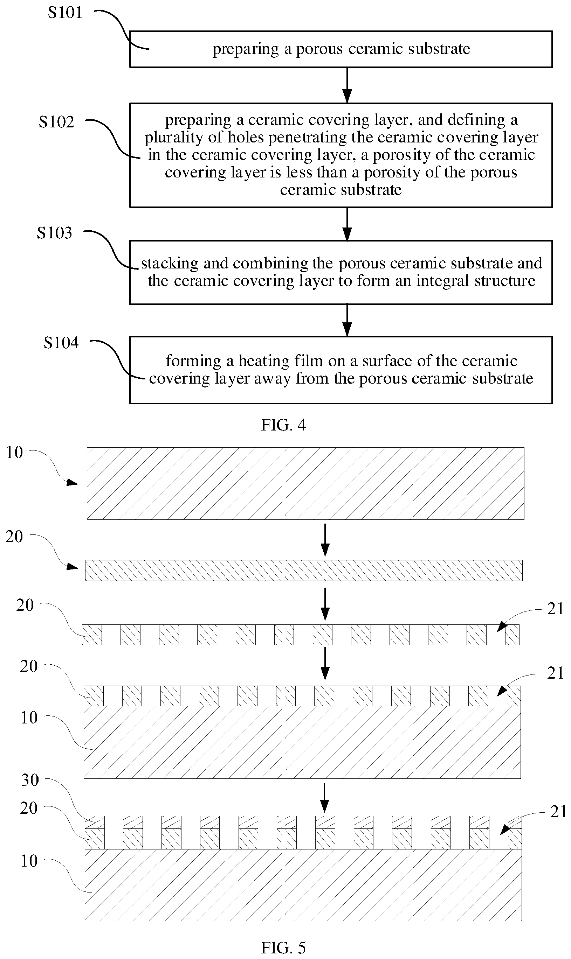

The present disclosure further provides a preparation method of an atomization core of an electronic atomization device, and the atomization core 100 in the foregoing embodiments may be made by the preparation method. As shown in FIG. 4 and FIG. 5, FIG. 4 is a schematic flowchart of a preparation method of the atomization core according to an embodiment of the present disclosure, and FIG. 5 is a schematic flowchart of processing corresponding to the preparing process in FIG. 4. The preparation method of the atomization core 100 includes operations at blocks shown in FIG. 4.

At block S101: the method prepares a porous ceramic substrate 10.

First, a raw material for making the porous ceramic substrate 10 is made into a first tape-casting slurry. The raw material for making the porous ceramic substrate 10 may be zirconium oxide, silicon oxide, aluminum oxide, mullite and the like, and at least one of the foregoing raw materials is mixed to form the first tape-casting slurry.

The first tape-casting slurry is then made into the porous ceramic substrate 10 by a tape-casting process. In addition, a tape-casting time can be controlled to cause a thickness of the porous ceramic substrate 10 to be in the range of 1 mm to 4 mm.

At block S102: the method prepares a ceramic covering layer 20, and defines a plurality of holes penetrating the ceramic covering layer 20 in the ceramic covering layer 20. The porosity of the ceramic covering layer 20 is less than that of the porous ceramic substrate 10.

First, a raw material for making the ceramic covering layer 20 is made into a second tape-casting slurry. The material for making the ceramic covering layer 20 may be zirconium oxide, silicon oxide, aluminum oxide, silicon carbide, mullite and the like, and a powder size of the material for making the ceramic covering layer 20 is in the range of 0.1 µm to 5 µm. At least one of the foregoing raw materials is mixed to form the second tape-casting slurry.

In some embodiments, the second tape-casting slurry can be then made into the ceramic covering layer 20 by the tape-casting process. In addition, a casting time can be controlled to cause the thickness of the ceramic covering layer 20 to be in the range of 0.05 mm to 0.2 mm.

Alternatively, in another embodiment, the second tape-casting slurry can be pressed into the ceramic covering layer 20 by a dry-pressing process, which is not specifically limited in the embodiments of the present disclosure.

After the ceramic covering layer 20 is prepared, a plurality of holes penetrating the ceramic covering layer 20 need to be further defined in the ceramic covering layer 20. A diameter of each hole 21 is in the range of 5 µm to 50 µm, and a ratio of a total area of the plurality of holes 21 to a cross-sectional area of the ceramic covering layer 20 perpendicular to an extending direction of the holes 21 is in the range of 5% to 15%.

Specifically, the plurality of holes 21 penetrating the ceramic covering layer 20 can be directly defined in the ceramic covering layer 20 through laser drilling, computerized numerical control (CNC) precision drilling, or selective corrosion drilling. By directly defining the through holes penetrating the ceramic covering layer 20 in the ceramic covering layer 20, the drilling process is simple, and the holes 21in the formed atomization core 100 have relatively high depth consistency.

In some embodiments, diameters of the plurality of holes 21 defined in the same ceramic covering layer 20 may be the same or may be different. The shape of the hole 21 defined in the ceramic covering layer 20 may be a circle, a rectangle, an ellipse, a triangle, a diamond, a regular or irregular polygon and the like, which is not specifically limited in the embodiments of the present disclosure.

In the foregoing embodiments, the porous ceramic substrate 10 is first prepared, and the ceramic covering layer 20 is then prepared. It should be understood that, in another embodiment, the ceramic covering layer 20 can be first prepared, and the porous ceramic substrate 10 is then prepared. Alternatively, in still another embodiment, the ceramic covering layer 20 and the porous ceramic substrate 10 are prepared at the same time, which is not specifically limited in the embodiments of the present disclosure.

After operations S101 and S102 are performed to obtain the porous ceramic substrate 10 and the ceramic covering layer 20, the following operations are performed.

At block S103: the method stacks and combines the porous ceramic substrate 10 and the ceramic covering layer 20 together to form an integral structure.

Specifically, in an embodiment, the ceramic covering layer 20 can be stacked on one side of the porous ceramic substrate 10, and the ceramic covering layer 20 and the porous ceramic substrate 10 are connected and fixed through bonding.

In some embodiments, the ceramic covering layer 20 can be stacked on one side of the porous ceramic substrate 10, and the porous ceramic substrate 10 and the ceramic covering layer 20 are connected through sintering.

The sintering refers to a process in which solid particles of a ceramic green body are mutually bonded under a high temperature (not higher than a melting point). As crystalline grains grow, gaps (pores) and grain boundaries are gradually decreased, and through mass transfer, a total volume of the ceramic green body shrinks and the density thereof is increased. Finally, the ceramic green body becomes a dense polycrystalline sintered compact with a type of microscopic structure. In this embodiment, the ceramic covering layer 20 and the porous ceramic substrate 10 are connected through sintering, and no harmful material is generated, so that the safety performance of the atomization core 100 can be improved.

Referring to FIG. 4 and FIG. 5, in this embodiment, after operation S103 is performed to obtain the porous ceramic substrate 10 and the ceramic covering layer 20 that form an integral structure, the method further includes the following operation.

At block S104: the method forms a heating film 30 on a surface of the ceramic covering layer 20 away from the porous ceramic substrate 10.

A thickness of the heating film is in the range of 2 µm to 10 µm. In some embodiments, the heating film 30 may be formed on the ceramic covering layer 20 through physical vapor deposition (PVD), electroplating, electro-deposition, ion plating, coating, chemical vapor deposition (CVD) and the like. A uniformly distributed heating film 30 with a relatively small thickness and a relatively large area may be formed in any of the foregoing manners. In this way, when the heating film 30 is electrically connected to an electrode, the heating film 30 generates heat uniformly and has a large heating area and high heat utilization ratio. In addition, precipitation of heavy metal substance inside the atomization core 100 can be greatly reduced, thereby further improving the safety performance.

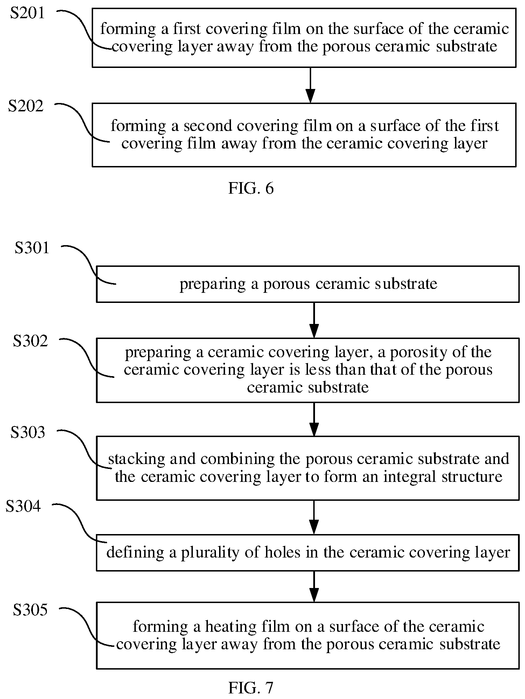

In some embodiments, as shown in FIG. 3 and FIG. 6, FIG. 6 is a schematic flowchart of operation S104 in FIG. 4. The operation of forming a heating film 30 on a surface of the ceramic covering layer 20 away from the porous ceramic substrate 10 includes the following operation at blocks shown in FIG. 6.

At block S201: the method forms a first covering film 32 on the surface of the ceramic covering layer 20 away from the porous ceramic substrate 10.

The first covering film 32 can be made of metal or alloy. The first covering film 32 can be made of a material with relatively strong bonding force to the porous ceramic substrate 10. For example, the first covering film 32 can be made of titanium, zirconium, titanium-aluminum alloy, titanium-zirconium alloy, titanium-molybdenum alloy, titanium-niobium alloy, iron-aluminum alloy, tantalum-aluminum alloy and the like.

At block S202: the method forms a second covering film 34 on a surface of the first covering film 32 away from the ceramic covering layer 20.

The second covering film 34 can also be made of metal or alloy. The second covering film 34 may be made of a material with relatively strong resistance to oxidation. For example, the second covering film 34 can be platinum, palladium, palladium-copper alloy, gold-silver-platinum alloy, gold-silver alloy, palladium-silver alloy, gold-platinum alloy and the like.

In some embodiments, the first covering film 32 and the second covering film 34 can be sequentially formed on the surface of the ceramic covering layer 20 away from the porous ceramic substrate 10 through PVD, CVD, electroplating, electro-deposition, ion plating, coating and the like. The first covering film 32 and the second covering film 34 that are formed in the foregoing manners have a relatively small thickness and a relatively large area, and are uniformly distributed, so that when the heating film 30 is electrically connected to an electrode, the heating film 30 generates heat uniformly, and has a large heating area and high heat utilization ratio. In addition, precipitation of heavy metal substance inside the atomization core 100 can be greatly reduced, thereby further improving the safety performance.

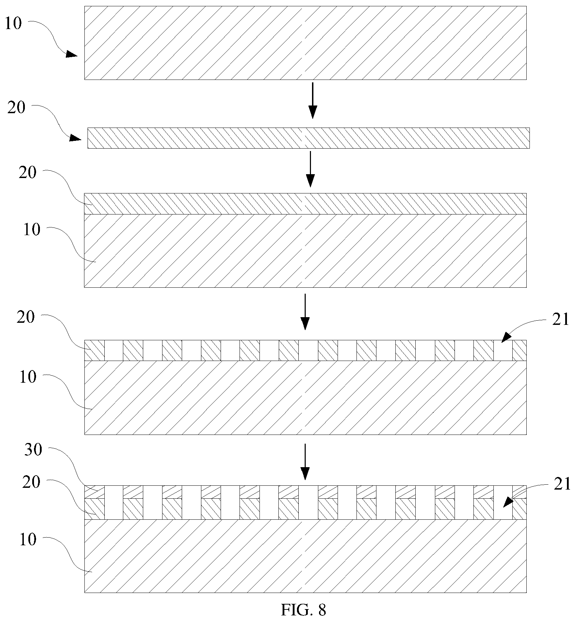

In another embodiment, referring to FIG. 7 and FIG. 8, FIG. 7 is a schematic flowchart of a preparation method of an atomization core according to another embodiment of the present disclosure, and FIG. 8 is a schematic flowchart of processing corresponding to the preparing process in FIG. 7. The preparation method of the atomization core 100 in this embodiment includes the following operations at blocks shown in FIG. 7.

At block S301: the method prepares a porous ceramic substrate 10.

At block S302: the method prepares a ceramic covering layer 20. A porosity of the ceramic covering layer 20 is less than that of the porous ceramic substrate 10.

At block S303: the method stacks and combines the porous ceramic substrate 10 and the ceramic covering layer 20 together to form an integral structure.

At block S304: the method defines a plurality of holes 21 in the ceramic covering layer 20.

At block S305: the method defines a heating film 30 on a surface of the ceramic covering layer 20 away from the porous ceramic substrate 10.

Operation S301 is substantially the same as operation S101 in the foregoing embodiments, operation S303 is substantially the same as operation S103 in the foregoing embodiments, and operation S305 is substantially the same as operation S104 in the foregoing embodiments. Refer can be made to the description in the foregoing embodiments, and details are not described herein again. A difference between this embodiment and the foregoing embodiments lies in that, in this embodiment, the plurality of holes 21 in the ceramic covering layer 20 are not defined while the ceramic covering layer 20 is being prepared, but are defined after the porous ceramic substrate 10 and the ceramic covering layer 20 are combined into an integral structure, and are defined through drilling on a side where the ceramic covering layer 20 is located.

In this embodiment, during the drilling process, first, it is necessary to set a drilling depth to be equal to a thickness of the ceramic covering layer 20, and then the drilling is initiated on the side where the ceramic covering layer 20 is located, to define a plurality of blind holes in the porous ceramic substrate 10 and the ceramic covering layer 20 that are combined into an integral structure. A drilling manner and a size of the hole are the same as those in the foregoing embodiments, and reference may be made to the description in the foregoing embodiments.

The present disclosure further provides an electronic atomization device, including a liquid storage cavity configured to store E-liquid and an atomization core. The E-liquid in the liquid storage cavity is capable of being transmitted to the ceramic covering layer through the porous ceramic substrate.

A structure of the atomization core in this embodiment is the same as the structure of the atomization core in the foregoing embodiments. Reference can be made to the description in the foregoing embodiments, and details are not described herein again.

In summary, a person skilled in the art can easily understand that, a ceramic covering layer 20 whose porosity is less than that of a porous ceramic substrate 10 is combined on a surface, which is closer to a heating component, of the porous ceramic substrate 10, so that powder falling of the atomization core can be avoided, because the ceramic covering layer 20 with a lower porosity has a greater density and prevents powder falling. In addition, the ceramic covering layer 20 with a less porosity can isolate precipitates of heavy metal substance inside the porous ceramic substrate 10, so that the heavy metal substance can be prevented from being entrenched into airflow during inhaling, thereby improving safety performance of the electronic atomization device.

The foregoing descriptions are merely embodiments of the present disclosure, and the protection scope of the present disclosure is not limited thereto.

## Claims

1. An atomization core (100) of an electronic atomization device, comprising: a porous ceramic substrate (10), a ceramic covering layer (20), and a heating film (30), wherein the ceramic covering layer (20) is combined on a surface of the porous ceramic substrate (10), the heating film (30) is combined on a surface of the ceramic covering layer (20) away from the porous ceramic substrate (10), a porosity of the ceramic covering layer (20) is less than that of the porous ceramic substrate (10), and a plurality of through holes (21) are defined in the ceramic covering layer (20), **characterized in that** the porosity of the ceramic covering layer (20) is in a range of 10% to 20%.

2. The atomization core (100) as claimed in claim 1, wherein the porosity of the porous ceramic substrate (10) is in a range of 40% to 80%; and/or
an average pore size of micro-pores in the porous ceramic substrate (10) is in a range of 10 µm to 40 µm; and/or
a material for making the porous ceramic substrate (10) is zirconium oxide, silicon oxide, aluminum oxide, or mullite; and/or
a thickness of the porous ceramic substrate (10) is in a range of 1 mm to 4 mm.

3. The atomization core (100) as claimed in claim 1 or 2, wherein
a material for making the ceramic covering layer (20) is zirconium oxide, silicon oxide, aluminum oxide, silicon carbide, or mullite; and/or
a thickness of the ceramic covering layer (20) is in a range of 0.05 mm to 0.2 mm; and/or
a powder size of the material for making the ceramic covering layer (20) is in a range of 0.1 µm to 5 µm.

4. The atomization core (100) as claimed in any one of claims 1-3, wherein a diameter of each of the plurality of through holes (21) is in a range of 5 µm to 50 µm.

5. The atomization core (100) as claimed in claim 4, wherein a ratio of a total opening area of the plurality of through holes (21) to a cross-sectional area of the ceramic covering layer (20) perpendicular to an extending direction of the through holes (21) is in a range of 5% to 15%.

6. The atomization core (100) as claimed in any one of claims 1-5, wherein the heating film (30) is made of metal or alloy; and/or
a thickness of the heating film (30) is in a range of 2 µm to 10 µm.

7. The atomization core (100) as claimed in any one of claims 1-6, wherein the heating film (30) comprises a first covering film (32) and a second covering film (34); and the first covering film (32) is stacked on the surface of the ceramic covering layer (20) away from the porous ceramic substrate (10), and the second covering film (34) is stacked on a surface of the first covering film (32) away from the ceramic covering layer (20).

8. The atomization core (100) as claimed in claim 7, wherein the first covering film (32) and the second covering film (34) are made of metal or alloy.

9. A preparation method of an atomization core (100) of an electronic atomization device, comprising:
preparing (S101) a porous ceramic substrate (10);
preparing (S102) a ceramic covering layer (20), and defining, in the ceramic covering layer (20), a plurality of holes (21) penetrating the ceramic covering layer (20), wherein a porosity of the ceramic covering layer (20) is less than that of the porous ceramic substrate (10)
stacking (S103) and combining the porous ceramic substrate (10) and the ceramic covering layer (20) to form an integral structure; and
forming (S104) a heating film (30) on a surface of the ceramic covering layer (20) away from the porous ceramic substrate (10)
**characterized in that** the porosity of the ceramic covering layer (20) is in a range of 10% to 20%.

10. The preparation method as claimed in claim 9, wherein the preparing (S101) the porous ceramic substrate (10) comprises:
making a first tape-casting slurry from a raw material for forming the porous ceramic substrate (10); and
making the porous ceramic substrate (10) through a tape-casting process, wherein a thickness of the porous ceramic substrate (10) is in a range of 1 mm to 4 mm.

11. The preparation method as claimed in any one of claims 9-10, wherein the preparing (S102) the ceramic covering layer (20) comprise:
making a second tape-casting slurry from a raw material for forming the ceramic covering layer (20), wherein a powder size of the raw material for forming the ceramic covering layer (20) is in a range of 0.1 µm to 5 µm; and
making the ceramic covering layer (20) through a tape-casting process or a dry-pressing process, wherein a thickness of the ceramic covering layer (20) is in a range of 0.05 mm to 0.2 mm.

12. The preparation method as claimed in any one of claims 9-11, wherein the stacking (S103) and combining the porous ceramic substrate (10) and the ceramic covering layer (20) to form the integral structure comprises:
connecting the porous ceramic substrate (10) to the ceramic covering layer (20) through bonding or sintering.

13. The preparation method as claimed in any one of claims 9-12, wherein the forming (S104) the heating film (30) on the surface of the ceramic covering layer (20) away from the porous ceramic substrate (10) comprises:
forming the heating film (30) on the surface of the ceramic covering layer (20) away from the porous ceramic substrate (10) through physical vapor deposition PVD, chemical vapor deposition CVD, electroplating, electro-deposition, ion plating, or coating, a thickness of the heating film (30) is in a range of 2 µm to 10 µm.

14. The preparation method as claimed in any one of claims 9-13, wherein the forming (S104) the heating film (30) on the surface of the ceramic covering layer (20) away from the porous ceramic substrate (10) comprises:
forming (S201) a first covering film (32) on the surface of the ceramic covering layer (20) away from the porous ceramic substrate (10) through physical vapor deposition PVD, chemical vapor deposition CVD, electroplating, electro-deposition, ion plating, or coating; and
forming (S202) a second covering film (34) on a surface of the first covering film (32) away from the ceramic covering layer (20) through PVD, CVD, electroplating, electro-deposition, ion plating, or coating, wherein the first covering film (32) and the second covering film (34) form the heating film (30).

15. An electronic atomization device, **characterized by** comprising a liquid storage cavity configured to store E-liquid and the atomization core (100) as claimed in any one of claims 1-8, wherein the E-liquid in the liquid storage cavity is capable of being transmitted to the ceramic covering layer (20) through the porous ceramic substrate (10).

## Patentansprüche

1. Zerstäubungskern (100) eines elektronischen Zerstäubungsgeräts, umfassend ein poröses Keramiksubstrat (10), eine Keramikabdeckungsschicht (20) und einen Heizfilm (30), wobei die Keramikabdeckungsschicht (20) auf einer Oberfläche des porösen Keramiksubstrats (10) angeordnet ist, der Heizfilm (30) auf einer der porösen Keramiksubstratschicht (10) abgewandten Oberfläche der Keramikabdeckungsschicht (20) angeordnet ist, wobei die Porosität der Keramikabdeckungsschicht (20) geringer ist als die des porösen Keramiksubstrats (10), und wobei eine Vielzahl von Durchgangslöchern (21) in der Keramikabdeckungsschicht (20) definiert ist, wobei die Porosität der Keramikabdeckungsschicht (20) im Bereich von 10 % bis 20 % liegt.

2. Der Zerstäubungskern (100) gemäß Anspruch 1, wobei die Porosität des porösen Keramiksubstrats (10) im Bereich von 40 % bis 80 % liegt, und/oder
die durchschnittliche Porengröße der Mikroporen im porösen Keramiksubstrat (10) im Bereich von 10 µm bis 40 µm liegt,
und/oder das Material zur Herstellung des porösen Keramiksubstrats (10) Zirkoniumoxid, Siliziumoxid, Aluminiumoxid oder Mullit ist, und/oder
die Dicke des porösen Keramiksubstrats (10) im Bereich von 1 mm bis 4 mm liegt.

3. Der Zerstäubungskern (100) gemäß Anspruch 1 oder 2, wobei
das Material zur Herstellung der Keramikabdeckungsschicht (20) Zirkoniumoxid, Siliziumoxid, Aluminiumoxid, Siliziumkarbid oder Mullit ist, und/oder
die Dicke der Keramikabdeckungsschicht (20) im Bereich von 0,05 mm bis 0,2 mm liegt, und/oder
die Partikelgröße des Materials zur Herstellung der Keramikabdeckungsschicht (20) im Bereich von 0,1 µm bis 5 µm liegt.

4. Der Zerstäubungskern (100) gemäß einer der Ansprüche 1 bis 3, wobei der Durchmesser jedes der Durchgangslöcher (21) im Bereich von 5 µm bis 50 µm liegt.

5. Der Zerstäubungskern (100) gemäß Anspruch 4, wobei das Verhältnis der Gesamtöffnungsfläche der Durchgangslöcher (21) zur Querschnittsfläche der Keramikabdeckungsschicht (20), die senkrecht zur Ausrichtungsrichtung der Durchgangslöcher (21) steht, im Bereich von 5 % bis 15 % liegt.

6. Der Zerstäubungskern (100) gemäß einer der Ansprüche 1 bis 5, wobei der Heizfilm (30) aus Metall oder einer Metalllegierung besteht, und/oder
die Dicke des Heizfilms (30) im Bereich von 2 µm bis 10 µm liegt.

7. Der Zerstäubungskern (100) gemäß einer der Ansprüche 1 bis 6, wobei der Heizfilm (30) einen ersten Abdeckfilm (32) und einen zweiten Abdeckfilm (34) umfasst, wobei der erste Abdeckfilm (32) auf der der porösen Keramiksubstratschicht (10) abgewandten Oberfläche der Keramikabdeckungsschicht (20) gestapelt ist, und der zweite Abdeckfilm (34) auf einer der Keramikabdeckungsschicht (20) abgewandten Oberfläche des ersten Abdeckfilms (32) gestapelt ist.

8. Der Zerstäubungskern (100) gemäß Anspruch 7, wobei der erste Abdeckfilm (32) und der zweite Abdeckfilm (34) aus Metall oder einer Metalllegierung bestehen.

9. Verfahren zur Herstellung eines Zerstäubungskerns (100) eines elektronischen Zerstäubungsgeräts, umfassend:
die Herstellung (S101) eines porösen Keramiksubstrats (10);
die Herstellung (S102) einer Keramikabdeckungsschicht (20) sowie die Definition einer Vielzahl von Durchgangslöchern (21) in der Keramikabdeckungsschicht (20), wobei die Porosität der Keramikabdeckungsschicht (20) geringer ist als die des porösen Keramiksubstrats (10);
das Stapeln (S103) und die Kombination des porösen Keramiksubstrats (10) und der Keramikabdeckungsschicht (20) zur Bildung einer integrierten Struktur, und
die Bildung (S104) eines Heizfilms (30) auf einer der porösen Keramiksubstratschicht (10) abgewandten Oberfläche der Keramikabdeckungsschicht (20),
**dadurch gekennzeichnet, dass** die Porosität der Keramikabdeckungsschicht (20) im Bereich von 10 % bis 20 % liegt.

10. Das Herstellungsverfahren gemäß Anspruch 9, wobei die Herstellung (S101) des porösen Keramiksubstrats (10) umfasst:
die Herstellung einer ersten Suspension für das Streifen-Gießverfahren (Tape-Casting) aus einem Ausgangsmaterial zur Bildung des porösen Keramiksubstrats (10), und
die Herstellung des porösen Keramiksubstrats (10) durch ein Streifen-Gießverfahren (Tape-Casting), wobei die Dicke des porösen Keramiksubstrats (10) im Bereich von 1 mm bis 4 mm liegt.

11. Das Herstellungsverfahren gemäß einer der Ansprüche 9 bis 10, wobei die Herstellung (S102) der Keramikabdeckungsschicht (20) umfasst:
die Herstellung einer zweiten Suspension für das Streifen-Gießverfahren (Tape-Casting) aus einem Ausgangsmaterial zur Bildung der Keramikabdeckungsschicht (20), wobei die Partikelgröße des Ausgangsmaterials zur Bildung der Keramikabdeckungsschicht (20) im Bereich von 0,1 µm bis 5 µm liegt, und
die Herstellung der Keramikabdeckungsschicht (20) durch ein Streifen-Gießverfahren (Tape-Casting) oder ein Trockenpressverfahren, wobei die Dicke der Keramikabdeckungsschicht (20) im Bereich von 0,05 mm bis 0,2 mm liegt.

12. Das Herstellungsverfahren gemäß einer der Ansprüche 9 bis 11, wobei das Stapeln (S103) und die Kombination des porösen Keramiksubstrats (10) und der Keramikabdeckungsschicht (20) zur Bildung der integrierten Struktur umfasst:
die Verbindung des porösen Keramiksubstrats (10) mit der Keramikabdeckungsschicht (20) durch Kleben oder Sintern.

13. Das Herstellungsverfahren gemäß einer der Ansprüche 9 bis 12, wobei die Bildung (S104) des Heizfilms (30) auf der der porösen Keramiksubstratschicht (10) abgewandten Oberfläche der Keramikabdeckungsschicht (20) umfasst:
die Bildung des Heizfilms (30) auf der Oberfläche der Keramikabdeckungsschicht (20) abgewandt vom porösen Keramiksubstrat (10) durch Physikalische Gasphasenabscheidung (PVD), Chemische Gasphasenabscheidung (CVD), Galvanisieren, Elektrodeposition, Ion Plating oder Beschichten, wobei die Dicke des Heizfilms (30) im Bereich von 2 µm bis 10 µm liegt.

14. Das Herstellungsverfahren gemäß einer der Ansprüche 9 bis 13, wobei die Bildung (S104) des Heizfilms (30) auf der der porösen Keramiksubstratschicht (10) abgewandten Oberfläche der Keramikabdeckungsschicht (20) umfasst:
die Bildung (S201) eines ersten Abdeckfilms (32) auf der Oberfläche der Keramikabdeckungsschicht (20) abgewandt vom porösen Keramiksubstrat (10) durch Physikalische Gasphasenabscheidung (PVD), Chemische Gasphasenabscheidung (CVD), Galvanisieren, Elektrodeposition, Ion Plating oder Beschichten; und
die Bildung (S202) eines zweiten Abdeckfilms (34) auf einer Oberfläche des ersten Abdeckfilms (32) abgewandt von der Keramikabdeckungsschicht (20) durch PVD, CVD, Galvanisieren, Elektrodeposition, Ion Plating oder Beschichten, wobei der erste Abdeckfilm (32) und der zweite Abdeckfilm (34) den Heizfilm (30) bilden.

15. Ein elektronisches Zerstäubungsgerät, **dadurch gekennzeichnet, dass** es eine Flüssigkeitsspeicherkammer umfasst, die zum Speichern eines E-Liquids eingerichtet ist, und den Zerstäubungskern (100) gemäß einer der Ansprüche 1 bis 8, wobei das in der Flüssigkeitsspeicherkammer vorhandene E-Liquid über das poröse Keramiksubstrat (10) auf die Keramikabdeckungsschicht (20) übertragen werden kann.

## Revendications

1. Noyau d'atomisation (100) d'un dispositif électronique d'atomisation, comprenant un substrat céramique poreux (10), une couche de recouvrement céramique (20) et un film chauffant (30), dans lequel la couche de recouvrement céramique (20) est combinée sur une surface du substrat céramique poreux (10), le film chauffant (30) est combiné sur une surface de la couche de recouvrement céramique (20) éloignée du substrat céramique poreux (10), la porosité de la couche de recouvrement céramique (20) est inférieure à celle du substrat céramique poreux (10), et une pluralité de trous traversants (21) est définie dans la couche de recouvrement céramique (20), **caractérisé en ce que** la porosité de la couche de recouvrement céramique (20) est comprise entre 10 % et 20 %.

2. Le noyau d'atomisation (100) selon la revendication 1, dans lequel la porosité du substrat céramique poreux (10) est comprise entre 40 % et 80 %, et/ou
la taille moyenne des micropores du substrat céramique poreux (10) est comprise entre 10 µm et 40 µm, et/ou
le matériau servant à fabriquer le substrat céramique poreux (10) est de l'oxyde de zirconium, de l'oxyde de silicium, de l'oxyde d'aluminium ou de la mullite, et/ou
l'épaisseur du substrat céramique poreux (10) est comprise entre 1 mm et 4 mm.

3. Le noyau d'atomisation (100) selon la revendication 1 ou 2, dans lequel
le matériau servant à fabriquer la couche de recouvrement céramique (20) est de l'oxyde de zirconium, de l'oxyde de silicium, de l'oxyde d'aluminium, du carbure de silicium ou de la mullite, et/ou
l'épaisseur de la couche de recouvrement céramique (20) est comprise entre 0,05 mm et 0,2 mm, et/ou
la taille des particules du matériau servant à fabriquer la couche de recouvrement céramique (20) est comprise entre 0,1 µm et 5 µm.

4. Le noyau d'atomisation (100) selon l'une quelconque des revendications 1 à 3, dans lequel le diamètre de chacun des trous traversants (21) est compris entre 5 µm et 50 µm.

5. Le noyau d'atomisation (100) selon la revendication 4, dans lequel le rapport entre la surface totale des trous traversants (21) et la surface de la coupe transversale de la couche de recouvrement céramique (20) perpendiculaire à la direction d'extension des trous traversants (21) est compris entre 5 % et 15 %.

6. Le noyau d'atomisation (100) selon l'une quelconque des revendications 1 à 5, dans lequel le film chauffant (30) est constitué d'un métal ou d'un alliage métallique, et/ou
l'épaisseur du film chauffant (30) est comprise entre 2 µm et 10 µm.

7. Le noyau d'atomisation (100) selon l'une quelconque des revendications 1 à 6, dans lequel le film chauffant (30) comprend un premier film de recouvrement (32) et un second film de recouvrement (34), le premier film de recouvrement (32) étant superposé sur la surface de la couche de recouvrement céramique (20) éloignée du substrat céramique poreux (10), et le second film de recouvrement (34) étant superposé sur une surface du premier film de recouvrement (32) éloignée de la couche de recouvrement céramique (20).

8. Le noyau d'atomisation (100) selon la revendication 7, dans lequel le premier film de recouvrement (32) et le second film de recouvrement (34) sont constitués d'un métal ou d'un alliage métallique.

9. Procédé de préparation d'un noyau d'atomisation (100) d'un dispositif électronique d'atomisation, comprenant :
la préparation (S101) d'un substrat céramique poreux (10) ;
la préparation (S102) d'une couche de recouvrement céramique (20) ;
et la définition, dans la couche de recouvrement céramique (20), d'une pluralité de trous (21) traversant la couche de recouvrement céramique (20), dans laquelle la porosité de la couche de recouvrement céramique (20) est inférieure à celle du substrat céramique poreux (10) ;
l'empilement (S103) et la combinaison du substrat céramique poreux (10) et de la couche de recouvrement céramique (20) afin de former une structure intégrale, et
la formation (S104) d'un film chauffant (30) sur une surface de la couche de recouvrement céramique (20) éloignée du substrat céramique poreux (10).
**Caractérisée en ce que** la porosité de la couche de recouvrement céramique (20) est comprise entre 10 % et 20 %.

10. Le procédé de préparation selon la revendication 9, dans lequel la préparation (S101) du substrat céramique poreux (10) comprend :
la fabrication d'une première pâte pour coulage en bande à partir d'un matériau servant à former le substrat céramique poreux (10), and
la fabrication du substrat céramique poreux (10) par un procédé de coulage en bande, dans lequel l'épaisseur du substrat céramique poreux (10) est comprise entre 1 mm et 4 mm.

11. Le procédé de préparation selon l'une quelconque des revendications 9 à 10, dans lequel la préparation (S102) de la couche de recouvrement céramique (20) comprend :
la fabrication d'une seconde pâte pour coulage en bande à partir d'un matériau servant à former la couche de recouvrement céramique (20), dans lequel la taille des particules du matériau servant à former la couche de recouvrement céramique (20) est comprise entre 0,1 µm et 5 µm, et
la fabrication de la couche de recouvrement céramique (20) par un procédé de coulage en bande ou un procédé de pressage à sec, dans lequel l'épaisseur de la couche de recouvrement céramique (20) est comprise entre 0,05 mm et 0,2 mm.

12. Le procédé de préparation selon l'une quelconque des revendications 9 à 11, dans lequel l'empilement (S103) et la combinaison du substrat céramique poreux (10) et de la couche de recouvrement céramique (20) afin de former la structure intégrale comprennent :
la connexion du substrat céramique poreux (10) à la couche de recouvrement céramique (20) par collage ou frittage.

13. Le procédé de préparation selon l'une quelconque des revendications 9 à 12, dans lequel la formation (S104) du film chauffant (30) sur la surface de la couche de recouvrement céramique (20) éloignée du substrat céramique poreux (10) comprend :
la formation du film chauffant (30) sur la surface de la couche de recouvrement céramique (20) éloignée du substrat céramique poreux (10) par dépôt physique en phase vapeur (PVD), dépôt chimique en phase vapeur (CVD), placage électrolytique, électrodéposition, plaquage ionique ou revêtement, l'épaisseur du film chauffant (30) étant comprise entre 2 µm et 10 µm.

14. Le procédé de préparation selon l'une quelconque des revendications 9 à 13, dans lequel la formation (S104) du film chauffant (30) sur la surface de la couche de recouvrement céramique (20) éloignée du substrat céramique poreux (10) comprend :
la formation (S201) d'un premier film de recouvrement (32) sur la surface de la couche de recouvrement céramique (20) éloignée du substrat céramique poreux (10) par dépôt physique en phase vapeur (PVD), dépôt chimique en phase vapeur (CVD), placage électrolytique, électrodéposition, plaquage ionique ou revêtement, et
la formation (S202) d'un second film de recouvrement (34) sur une surface du premier film de recouvrement (32) éloignée de la couche de recouvrement céramique (20) par PVD, CVD, placage électrolytique, électrodéposition, plaquage ionique ou revêtement, le premier film de recouvrement (32) et le second film de recouvrement (34) formant le film chauffant (30).

15. Dispositif électronique d'atomisation, **caractérisé en ce qu'**il comprend une cavité de stockage de liquide configurée pour stocker un E-liquide et le noyau d'atomisation (100) selon l'une quelconque des revendications 1 à 8, dans lequel le E-liquide présent dans la cavité de stockage est susceptible d'être transmis à la couche de recouvrement céramique (20) à travers le substrat céramique poreux (10).
